# EUROPEAN PATENT APPLICATION

(11) **EP 4 516 503 A1**
(43) Date of publication of application: **05.03.2025**
(21) Application number: 23795960.6
(22) Date of filing: 22.03.2023
(51) Int. Cl.: B32B 27/32, B32B 27/00, B32B 27/28, B65D 65/40

(54) **THERMALLY SHRINKABLE MULTILAYER FILM AND METHOD FOR PRODUCING SAME**

(30) Priority: 28.04.2022 JP 2022074263
(71) Applicant: Kureha Corporation, Chuo-ku Tokyo 103-8552 (JP)
(72) Inventor: NAOHARA Ryo, Tokyo 103-8552 (JP); ITOH Tadayoshi, Tokyo 103-8552 (JP); MOCHIMARU Tomohide, Tokyo 103-8552 (JP)
(74) Representative: Zimmermann & Partner Patentanwälte mbB
(86) International application number: PCT/JP2023/011242
(87) International publication number: WO 2023/210213

(57) **Abstract**

To provide a multilayer film containing 80 mass% or more of a polyolefin-based resin and having excellent mechanical characteristics and thermal shrinkage properties. A thermally shrinkable multilayer film according to an embodiment of the present invention is a multilayer film including at least three layers including an outer surface layer (a) containing a polyolefin-based resin, an intermediate layer (b) containing a gas-barrier resin, and an inner surface layer (c) containing a polyolefin-based resin, in which at least one layer of the multilayer film contains a cyclic olefin copolymer; when a total mass of the multilayer film is 100 mass%, a proportion of a mass of the polyolefin-based resin in the multilayer film is 80 mass% or more, and a proportion of a mass of the cyclic olefin copolymer in the multilayer film is 15 mass% or more.

## Description

### TECHNICAL FIELD

The present invention relates to a thermally shrinkable multilayer film containing a polyolefin-based resin and a method for producing the same.

### BACKGROUND ART

Thermally shrinkable films for packaging hams, sausages, and other food products have a plurality of required characteristics, such as sealing properties to package contents, mechanical characteristics to protect contents, gas barrier properties to keep freshness, and shrinkability to maintain good appearance, and laminated films of a plurality of resins have been widely used to meet these needs (e.g., see Patent Documents 1 to 3).

In many cases, as described in Patent Document 1, such a thermally shrinkable multilayer film includes a polyolefin-based resin (hereinafter, also abbreviated as "PO") having excellent sealing properties and extrusion characteristics and a polyamide-based resin having excellent mechanical characteristics and stretchability (hereinafter, also abbreviated as "PA") as major layers.

In recent years, demands for recycling of packaging materials have been increased. For example, CEFLEX, which is a consortium in Europe, presents a guideline describing a packaging material containing 90 mass% or more of PO and 5 mass% or less of each of the resins other than PO, such as PA, as being material recyclable. Note that "material recycling" refers to an act of reuse of a plastic waste after treatments such as crushing and dissolving are performed.

A thermally shrinkable multilayer film, in which PO and PA are laminated as described above, does not fall within the guideline of CEFLEX in many cases, and cannot achieve performances that are practical for use as a material-recycled product because resins in layers are immiscible and mechanical characteristics and appearance are significantly impaired due to layer separation even when remolding is performed by melting and mixing after use.

### CITATION LIST

### PATENT DOCUMENT

Patent Document 1: WO 2007/094144
Patent Document 2: JP 2015-512801 T
Patent Document 3: WO 2013/121874

### SUMMARY OF INVENTION

### TECHNICAL PROBLEM

Thus, a configuration in which a proportion of PO is set as high as possible is desired to achieve a material configuration suitable for material recycling. However, in a case where the proportion of PO is increased and the used proportion of PA is decreased, stretchability required for formation of a thermally shrinkable multilayer film and mechanical characteristics are impaired.

Note that mechanical characteristics mainly refer to strength against puncturing by a needle and are required to suppress pinholes resulting from packaging of contents with protrusions, such as meat on the bone. Furthermore, stretchability refers to, for example, stable film formability of inflation bubble (second bubble) in the inflation method (triple bubble process) described in Patent Document 2. In many cases, a thermally shrinkable multilayer film for meat packaging is required to shrink at a temperature of 100°C or lower, and to satisfy this requirement, film formation is performed by an inflation method (triple bubble process), by which an oriented film having a high degree of orientation can be obtained at low cost.

Patent Document 2 describes a thermally shrinkable multilayer film including a cyclic olefin copolymer (hereinafter, abbreviated as COC). Although the film in this document has a fracture resistance of 2 to 10 J/mm (≈ 1 to 150 N/mm) when the film is subjected to a puncturing test at a speed of 1 mm/min using a rod having a spherical ball with a ϕ2.5 tip, it is difficult to say that the film has enough strength to package contents with protrusions, such as meat on the bone. Furthermore, the film in this document is implemented as a film containing PA, and it is difficult to say that the film is a film suitable for reuse. Furthermore, in this document, material recyclability, stretchability, and modulus of elasticity of the film containing COC, and use in a sealant layer and performances (sealing strength, blocking property) in such use are not described.

Furthermore, in a case where PA is not used and only PO is stretched in film formation by the inflation method (triple bubble process), PO cannot form a bubble unless the PO is preheated close to a crystalline melting point, orientation of a molecular chain is poor, and it is difficult to achieve adequate thermal shrinkage properties and mechanical characteristics.

Film formation techniques of a known thermally shrinkable multilayer film including no PA include imparting a crosslinked structure to PO by electron beam irradiation and use of ionomer, as described in Patent Document 3. However, since a crosslinked PO turns into a gel at the time of melting, material recyclability is inhibited. Since an ionomer is expensive, a cost is increased, and in addition, in comparison to a case where PA is included, mechanical characteristics are poor and the modulus of elasticity of the film is low, and thus suitability for use in a packaging machine is impaired due to lack of elasticity.

The present invention has been made in light of the above problems, and an object of the present invention is to provide a multilayer film containing 80 mass% or more of a polyolefin-based resin and having excellent mechanical characteristics and thermal shrinkage properties.

### SOLUTION TO PROBLEM

The inventors of the present invention found that the problems described above can be solved by a thermally shrinkable multilayer film which contains a cyclic olefin copolymer in at least one layer of the multilayer film and in which a mass proportion of the cyclic olefin copolymer in the multilayer film is 15 mass% or more, and thus completed the present invention.

A thermally shrinkable multilayer film according to an embodiment of the present invention is a multilayer film including at least three layers including an outer surface layer (a) containing a polyolefin-based resin, an intermediate layer (b) containing a gas-barrier resin, and an inner surface layer (c) containing a polyolefin-based resin, in which at least one layer of the multilayer film contains a cyclic olefin copolymer; when a total mass of the multilayer film is 100 mass%, a proportion of a mass of the polyolefin-based resin in the multilayer film is 80 mass% or more, and a proportion of a mass of the cyclic olefin copolymer in the multilayer film is 15 mass% or more.

The polyolefin-based resin in the outer surface layer (a) and/or the inner surface layer (c) preferably contains at least one type selected from the group consisting of a very low density polyethylene and a linear low-density polyethylene, and a cyclic olefin copolymer.

The cyclic olefin copolymer preferably contains one or both of a cyclic olefin copolymer having a glass transition temperature of 50 to 68°C and a cyclic olefin copolymer having a glass transition temperature of -10 to 20°C.

The gas-barrier resin in the intermediate layer (b) preferably contains at least one type selected from the group consisting of a partially saponified product of an ethylene-vinyl acetate copolymer and a glycolic acid (co)polymer resin.

The thermally shrinkable multilayer film preferably has a tensile modulus of elasticity in a transverse direction (TD) of from 200 to 600 MPa.

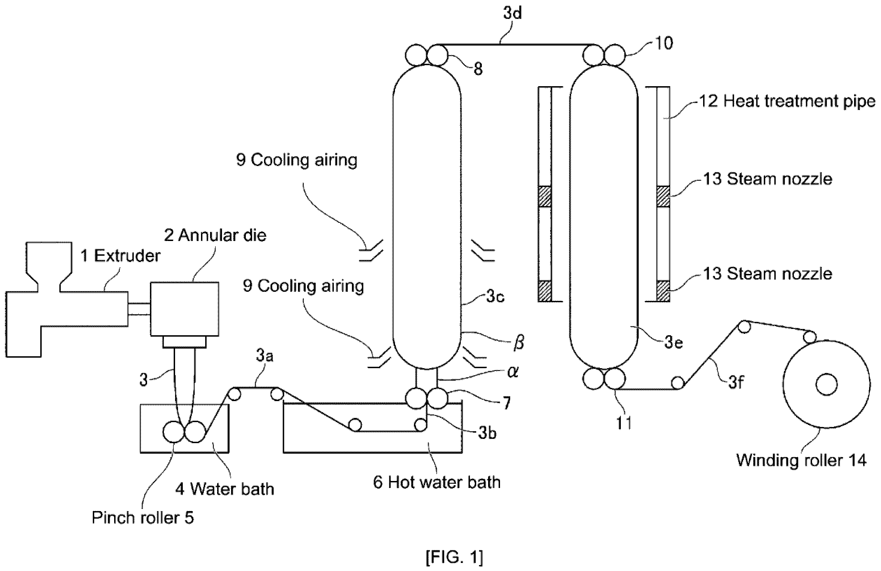

In a method for producing the thermally shrinkable multilayer film according to an embodiment of the present invention, a surface temperature of resins in a part just before TD stretching (α position in FIG. 1) is from 75 to 90°C, and a surface temperature of the resins in a bottom shoulder forming part (β position in FIG. 1) of an inflation bubble is lower than the surface temperature of the resins in the part just before TD stretching by a range of 5 to 30°C.

### ADVANTAGEOUS EFFECTS OF INVENTION

The thermally shrinkable multilayer film according to an embodiment of the present invention contains 80 mass% or more of a polyolefin-based resin and has excellent mechanical characteristics and thermal shrinkage properties. Thus, a thermally shrinkable multilayer film that is an environment-responsive packaging film and can be used as a packaging material having pinhole resistance for contents having protrusions is obtained.

### BRIEF DESCRIPTION OF THE DRAWINGS

FIG. 1 is a schematic diagram illustrating an apparatus for producing a thermally shrinkable multilayer film according to an embodiment of the present invention.

### DESCRIPTION OF EMBODIMENTS

A thermally shrinkable multilayer film according to an embodiment of the present invention is a multilayer film including at least three layers including an outer surface layer (a) containing a polyolefin-based resin, an intermediate layer (b) containing a gas-barrier resin, and an inner surface layer (c) containing a polyolefin-based resin; at least one layer of the multilayer film containing a cyclic olefin copolymer; when a total mass of the multilayer film is 100 mass%, a proportion of a mass of the polyolefin-based resin in the multilayer film being 80 mass% or more, and a proportion of a mass of the cyclic olefin copolymer in the multilayer film being 15 mass% or more.

The olefin in an embodiment of the present invention refers to a hydrocarbon having a double bond and represented by a formula CₙH₂ₙ. Furthermore, the cyclic olefin refers to a hydrocarbon that has a cyclic structure formed of carbon atoms and has a carbon-carbon double bond in the cyclic structure, and the number of the carbon-carbon double bond may be one or more (however, an aromatic ring is not included). In the present specification, a homopolymer or copolymer containing 50 mol% or more of a constituent unit derived from an olefin and/or a cyclic olefin is defined as the polyolefin-based resin.

The thermally shrinkable multilayer film according to an embodiment of the present invention contains a cyclic olefin copolymer in at least one layer of the multilayer film. In particular, the cyclic olefin copolymer is preferably contained in the outer surface layer (a) and/or the inner surface layer (c), and the cyclic olefin copolymer is more preferably contained in the inner surface layer (c).

In the thermally shrinkable multilayer film according to an embodiment of the present invention, when the total mass of the multilayer film is 100 mass%, the proportion of the mass of the polyolefin-based resin in the multilayer film is 80 mass% or greater, preferably 90 mass% or greater, and more preferably 95 mass% or greater, from the viewpoint of material recyclability. When the proportion of the mass of the polyolefin-based resin is less than the range described above, material recyclability is impaired due to immiscibility with a component other than the polyolefin-based resin. The proportion of the mass of the polyolefin-based resin (PO) can be calculated according to the following mathematical expression. Proportion of mass of polyolefin-based resin (mass%) = 100 × (total of "density × thickness" of layers containing polyolefin-based resin)/(total of "density × thickness" of all layers) In Table 2 described below, the proportion of the mass of the PO (mass%) is described as "PO mass proportion (wt%)"
However, the "density" of a layer in which two or more types of resins are blended is a sum of densities obtained by multiplying densities of the resins by mixed proportions of the resins.

In the thermally shrinkable multilayer film according to an embodiment of the present invention, when the total mass of the multilayer film is 100 mass%, a proportion of a mass of the cyclic olefin copolymer in the multilayer film is 15 mass% or greater, preferably from 15 to 80 mass%, more preferably from 15 to 50 mass%, and most preferably from 16 to 29 mass%. When the proportion of the mass of the cyclic olefin copolymer is less than 15 mass%, tensile strength during stretching is poor and thus stable film formation is difficult. When the proportion is greater than 80 mass%, flexibility of the film tends to be impaired. The proportion of the mass of the cyclic olefin copolymer (COC) can be calculated according to the following mathematical expression. Proportion of mass of cyclic olefin copolymer (%) = 100 × (total of "density × thickness × COC mixed proportion" of layers containing COC)/(total of "density × thickness" of all layers) In Table 2 described below, the proportion of the mass of the COC (mass%) is described as "COC mass proportion (wt%)"
However, the "density" of a layer in which two or more types of resins are blended is a sum of densities obtained by multiplying densities of the resins by mixed proportions of the resins.

Note that "stretching" in an embodiment of the present invention refers to a process of biaxial stretching in film formation of a thermally shrinkable film. Representative examples of the method of biaxial stretching include a tenter method and an inflation method. Although the process of film formation of a thermally shrinkable film is not limited to any of these methods, from the viewpoint of cost, an inflation method is particularly preferred. Furthermore, the inflation method is classified into a direct method (direct inflation) in which a fluid is directly charged into a molten resin extruded in a tubular shape, and a tubular stretching method (tubular biaxial stretching) including cooling and solidifying a molten resin extruded in a tubular shape once to form a tubular body, then heating the tubular body at an appropriate temperature, and performing stretching in a longitudinal direction (MD) and a transverse direction (TD) while charging a fluid into the inside of the tubular body, as described in Patent Document 2. The method for film formation of the thermally shrinkable film is particularly preferably the tubular stretching method. When the tubular stretching method is used in film formation of the thermally shrinkable film, stress during stretching tends to be high as compared to the tenter method or the direct method, and thus a thermally shrinkable film with an excellent shrinkage tends to be formed. The tubular biaxial stretching may be separately referred to as double bubble inflation (double bubble process) and triple bubble inflation (triple bubble process) based on the number of bubbles formed during the film formation process. The difference between these are difference in a heat treatment process after biaxial stretching, and both of the film formation methods can be used. Because a good dimensional stability of the thermally shrinkable film tends to be achieved, the triple bubble inflation is more preferred.

The outer surface layer (a) contains, as a thermoplastic resin, a polyolefin-based resin to impart excellent shrinkage properties, barrier properties against water vapor, and material recycle suitability.

Examples of the polyolefin-based resin (PO) in the outer surface layer (a) include an ethylene homopolymer; a propylene homopolymer; a copolymer of α-olefins having from 2 to 8 carbons, such as very low density polyethylene (VLDPE) and linear low density polyethylene (LLDPE); and a polyolefin-based copolymer such as a propylene-ethylene copolymer, a propylene-ethylene-butene-1 copolymer, an ethylene-vinyl acetate copolymer (EVA), an ethylene-acrylic acid copolymer (EAA), an ethylene-methacrylic acid copolymer (EMAA), an ethylene-methyl acrylate copolymer (EMA), an ethylene-ethyl acrylate copolymer (EEA), and an ethylene-butyl acrylate copolymer (EBA), and a cyclic olefin copolymer is also included. One type of these polyolefin-based resins may be used alone, or two or more types of these may be mixed and used. Among these, LLDPE or VLDPE is particularly preferred, and they include a resin produced by a Ziegler-Natta type catalytic reaction, and a resin produced by metallocene or a single-site reaction catalyst.

As the polyolefin-based resin in the outer surface layer (a), a mixture of at least one type selected from VLDPE and LLDPE, and a COC can be used.

The density of the LLDPE or VLDPE is preferably from 0.880 to 0.920 g/cm³, and more preferably from 0.890 to 0.915 g/cm³. Furthermore, the melt flow index (MI) of the LLDPE or VLDPE is preferably from 0.5 to 7.0 g/10 min, more preferably from 1.0 to 5.0 g/10 min, and even more preferably from 3.2 to 4.0 g/10 min. When the MI is from 3.2 to 4.0 g/10 min, excellent fluidity in a molten state is achieved, and variation in thickness of the film tends to be reduced while maintaining the puncture strength of the film. An example of the LLDPE or VLDPE is a product under a name "Evolue" sold by Prime Polymer Co., Ltd., and in this product, the α-olefin other than ethylene is 1-hexene. Note that MI is measured at 190°C in accordance with JIS K 7210.

The COC in the outer surface layer (a) is a resin containing a constituent unit derived from a cyclic olefin and a constituent unit derived from an olefin other than cyclic olefins, such as ethylene.
Examples of the cyclic olefin include, but are not limited to, norbornene and a derivative thereof (e.g., 2-norbornene and 5-methyl-2-norbornene); and cyclopentadiene and a derivative thereof (e.g., dicyclopentadiene and 2,3-dihydrocyclopentadiene).
Examples of the olefin other than cyclic olefins include, but are not limited to, α-olefins such as ethylene, propylene, and butylene.

Furthermore, examples of the COC in the outer surface layer (a) include a COC containing a constituent unit derived from ethylene in an amount of 60 to 90 mol%, and preferably 65 to 85 mol%, and a constituent unit derived from a cyclic olefin in an amount of 5 to 45 mol%, and preferably 10 to 40 mol%.

Furthermore, the glass transition temperature (Tg) of the COC is measured based on a peak temperature of a loss modulus E" in data obtained under conditions of a temperature increase rate of 5°C/min, a frequency of 62.8 rad/sec, and a strain amount of 0.1% in a tension mode of dynamic mechanical analysis (DMA), and the value thereof is preferably from 50 to 68°C. When the glass transition temperature is in the range described above, in the stretching process of the film, by setting such conditions that the surface temperature of the resins in a part just before TD stretching (a part just before a bottom shoulder forming part of an inflation bubble; α position in FIG. 1) is from 75 to 90°C, and the surface temperature of the resins in a bottom shoulder forming part (β position in FIG. 1) of the inflation bubble is lower than the surface temperature of the resins in the part just before TD stretching (α position in FIG. 1) by a range of 5 to 30°C, adequate tensile stress (tensile strength) is exhibited with respect to the inner pressure of the fluid charged into the inside of the tubular body during stretching, and film formation tends to be stably performed by the triple bubble inflation method. When the glass transition temperature is lower than 50°C, the tensile strength during stretching is poor, and stable film formation tends to be difficult, and in addition, the modulus of elasticity of the film is small, and mechanical aptitude during content filling tends to be poor. Furthermore, when the glass transition temperature is higher than 68°C, the resin temperature during stretching needs to be increased, and because degree of orientation is small, a shrinkage rate in hot water tends to be small. In addition, elongation at break in the puncture test tends to be small.

Furthermore, the melt flow index (MI) of the COC is preferably from 0.5 to 5.0 g/10 min, more preferably from 0.8 to 4.0 g/10 min, and even more preferably from 1.0 to 3.0 g/10 min. When the MI is lower than 0.5 g/10 min, fluidity in a molten state is deteriorated, thus thickness variation of the film tends to occur, and productivity tends to be impaired. When the MI is greater than 5.0 g/10 min, the elongation at break of the film when it is punctured by a needle-like protrusion may deteriorate. The COC is, for example, sold by Polyplastics Co., Ltd., under a name of "TOPAS". Note that MI is measured at 190°C in accordance with JIS K 7210.

The polyolefin-based resin in the outer surface layer (a) has a melting point of preferably from 80 to 170°C and more preferably from 95 to 160°C as measured by a differential scanning calorimeter (DSC) at a temperature increase rate of 10°C/min in accordance with JIS K 7121. When the melting point is lower than 80°C, heat resistance of the multilayer film is insufficient, and thus problems such as melting during shrinkage in hot water and attachment to a sealing base during heat sealing tend to occur. On the other hand, when the melting point is higher than 170°C, the melt-kneading temperature for a thermally shrinkable multilayer film after use tends to be high when it is subjected to material recycling, and thus a recycled product tends to be yellowish due to thermal degradation.

The gas barrier properties in an embodiment of the present invention refers to difficulty for an oxygen gas to permeate. A gas-barrier resin in an embodiment of the present invention refers to a resin having an oxygen permeability per 25 µm of a resin film at 23°C and 0%RH of 0.01 to 300 cm³/m²·day·atm, preferably 0.05 to 200 cm³/m²·day·atm, and most preferably 0.1 to 100 cm³/m²·day·atm.
The gas-barrier resin in the intermediate layer (b) can be selected from a partially saponified product of an ethylene-vinyl acetate copolymer, which is referred to as an ethylene-vinyl alcohol copolymer (hereinafter, also abbreviated as EVOH), a glycolic acid (co)polymer resin (hereinafter, also abbreviated as PGA), a vinylidene chloride copolymer (hereinafter, also abbreviated as PVDC), polyvinyl alcohol (PVA), a crystalline polyamide (MXD6) obtained by a polycondensation reaction of m-xylylenediamine and adipic acid, an aliphatic polyamide (PA) resin (e.g., nylon 6), an amorphous aromatic polyamide-based resin (e.g., nylon 61-6T), a polyacrylonitrile-based copolymer (PAN), and polyethylene terephthalate (PET). The intermediate layer (b) is preferably a resin that imparts excellent oxygen-barrier properties to prevent oxidative degradation of a material to be packaged.

The gas-barrier resin preferred as the intermediate layer (b) is EVOH, and in particular, an EVOH having an ethylene content of 20 to 60 mol%, and preferably from 30 to 50 mol%, and having a degree of saponification of 95% or greater is preferred. When the ethylene content of the EVOH is lower than the range described above, stretching processability tends to be inhibited. When the ethylene content is greater than 60 mol%, oxygen gas barrier properties tends to deteriorate. Furthermore, when the degree of saponification of the EVOH is less than 95%, oxygen gas barrier properties tend to be poor. The EVOH is, for example, sold by Kuraray Co., Ltd., under a name of "EVAL".

A gas-barrier resin preferred as the intermediate layer (b) is a glycolic acid (co)polymer resin. Examples of the glycolic acid (co)polymer resin include a homopolymer of polyglycolic acid and a copolymer of polyglycolic acid. Furthermore, in an embodiment of the present invention, the glycolic acid (co)polymer resin is preferably a glycolic acid (co)polymer resin made of a polyglycolic acid containing a repeating unit represented by the general formula below in a proportion of 60 mass% or more, more preferably a glycolic acid (co)polymer resin made of a polyglycolic acid containing the repeating unit in a proportion of 70 mass% or more, and particularly preferably a glycolic acid (co)polymer resin made of a polyglycolic acid containing the repeating unit in a proportion of 80 mass% or more. When the repeating unit represented by the general formula below in the polyglycolic acid is less than the lower limit, the inherent crystallinity of the polyglycolic acid is impaired, and the gas barrier properties and heat resistance of the resulting thermally shrinkable multilayer film tend to deteriorate. 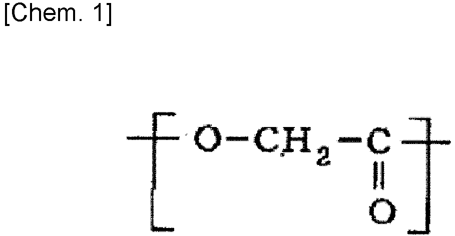 Since the glycolic acid (co)polymer resin has a lower oxygen gas permeability per unit thickness as compared to those of other gas-barrier resins such as EVOH and PVDC, even when the intermediate layer (b) has a small thickness, gas barrier properties that are practical for use can be exhibited. As a result, a volume proportion of the polyolefin layer is increased, and improvement in recyclability can be expected.
Furthermore, it is known that the glycolic acid (co)polymer resin is a hydrolyzable resin which forms a low molecular weight substance due to random cutting of the molecular chain upon hydrolysis, then breaks down when the molecular weight is reduced to a degree that cannot maintain its strength, and dissolves in water when the molecular weight is further reduced. By recycling of the thermally shrinkable multilayer film according to an embodiment of the present invention after hydrolysis of the intermediate layer (b), recycling can be performed with an even higher polyolefin proportion, and improvement in recyclability can be expected.

The inner surface layer (c) contains a polyolefin-based resin as a sealable thermoplastic resin. The inner surface layer (c) is preferably a resin having excellent heat-sealing properties among properties required for the thermally shrinkable multilayer film, and is more preferably a resin having mechanical characteristics, shrinkage properties, water vapor-barrier properties, and a material recycling suitability in addition to the heat-sealing properties.

The resin used for the inner surface layer (c) can be selected from the same polyolefin-based resins exemplified for the outer surface layer (a) and is particularly preferably a resin having a melting point of 80 to 150°C and preferably 95 to 130°C as measured by a differential scanning calorimeter (DSC) at a temperature increase rate of 10°C/min in accordance with JIS K 7121, taking heat-sealing properties into consideration. When the melting point of the film is lower than 80°C, sticking (blocking) of the inner surface layers (c) tends to occur. When the melting point is higher than 150°C, a temperature at which sealing can be performed is high, and stretchability during the triple bubble inflation tends to be inhibited. In addition, an additive such as a lubricant can be added as long as it does not inhibit the transparency of the film.

As the polyolefin-based resin in the inner surface layer (c), a mixture of at least one type selected from VLDPE and LLDPE, and a COC can be used to suppress sticking (blocking) of the inner surface layers (c). The mass proportion (mixed proportion) of the COC in the mixture is preferably from 1 to 70 mass%, more preferably from 20 to 60 mass%, and even more preferably from 40 to 50 mass%. When the mass of the COC is less than 1 mass%, sticking suppression effect tends to be poor. When the mass is greater than 70 mass%, heat-sealing properties tend to deteriorate.

The COC used for the inner surface layer (c) can be selected from the same COCs exemplified for the outer surface layer (a) and, for example, a COC having a glass transition temperature of 50 to 68°C can be used. Furthermore, to improve heat-sealing properties of the inner surface layer (c) at a low temperature, a COC having a glass transition temperature of 0 to 10°C can be further blended. That is, one or both of a COC having a glass transition temperature of 50 to 68°C and a COC having a glass transition temperature of -10 to 20°C can be used. The mass proportion (mixed proportion) of the COC having a glass transition temperature of 0 to 10°C is preferably from 5 to 30 mass%, and more preferably from 10 to 20 mass%, when the resin constituting the inner surface layer (c) is 100 mass%. When less than 5 mass% of the COC having a glass transition temperature of 0 to 10°C is contained, improvement effect of low temperature heat-sealing properties tends to be poor. When more than 30 mass% is contained, blocking suppression effect tends to deteriorate.

The thermally shrinkable multilayer film according to an embodiment of the present invention contains the outer surface layer (a) containing the polyolefin-based resin, the intermediate layer (b) containing the gas-barrier resin, and the inner surface layer (c) containing the polyolefin-based resin described above as essential constitutional layers but may optionally contain a plurality of additional layers (z) as the intermediate layers besides the intermediate layer (b) containing the gas-barrier resin to improve mechanical properties or processability of the multilayer film or the like. Examples of such an additional layer (z) is preferably a layer containing the polyolefin-based resin. Furthermore, for example, in a case where adhesive strength between layers is not sufficient, an adhesive resin layer may be provided.

The adhesive resin layer may be provided between layers as needed. As the adhesive resin, EVA, EEA, acid-modified polyolefins (reaction products of an olefin homopolymer or copolymer or the like with an unsaturated carboxylic acid, such as maleic acid or fumaric acid, or an acid anhydride, ester, or metal salt thereof, e.g., acid-modified VLDPE, acid-modified LLDPE, and acid-modified EVA), and the like may be used. A preferred example is an olefin-based resin modified with an acid such as maleic acid, an anhydride thereof, or the like.

The melting point of the thermoplastic resin selected as the additional layer (z) is preferably from 40 to 170°C, and more preferably from 50 to 160°C. When the melting point is lower than 40°C, heat resistance of the multilayer film tends to deteriorate. When the melting point is higher than 170°C, a melt-kneading temperature tends to be high when a thermally shrinkable multilayer film after use is subjected to material recycling, and thus a recycled product tends to be yellowish due to thermal degradation.

Furthermore, in the layer configuration described above, an organic lubricant, inorganic lubricant (antiblocking agent), and/or antistatic agent may be added to any of the layers.

An organic and/or inorganic lubricant is preferably contained in, above all, the inner surface layer (c) or the outer surface layer (a) in order to improve film slipperiness during film production, bag-forming capability during secondary processing, and suitability for packaging machines during content filling. Additionally, the inner and outer surfaces of the film may be powdered with corn starch or the like if necessary.

Examples of the organic lubricant include hydrocarbon-based lubricants, fatty acid-based lubricants, fatty acid amide-based lubricants, ester-based lubricants, and metal soaps. The organic lubricant may be in liquid or solid form. Among these lubricant, fatty acid amide-based lubricants and metal soaps are preferred due to their miscibility with the polyolefin resin. The organic lubricant is preferably used in a proportion of 0.1 to 0.2 mass% in the desired layers.

Examples of the inorganic lubricant (antiblocking agent) that may be used include known inorganic fillers added to a resin for the purpose of inhibiting sticking of the films, for example, talc, diatomaceous earth, silica, zeolite, calcium carbonate, and aluminosilicate. For example, silica, aluminosilicate, and zeolite are preferred from the perspective of refractive index and dispersibility.

The median volume average particle size D50 of the inorganic lubricant as measured by Coulter counter is preferably from 0.5 to 10 µm, and more preferably from 1 to 7 µm. For an inorganic lubricant having this average particle size, it is even more preferable to cut the portion of particles having a size greater than 10 µm. An inorganic lubricant is used in a proportion of, for example, 0.05 to 2 mass%, and particularly preferably 0.1 to 1 mass%, in the desired layers.

The organic or inorganic lubricant is preferably added to the desired resin layer as a master batch containing the lubricant in the resin constituting the desired layer or a resin miscible therewith, in a concentration of, for example, from 1 to 10 mass%.

As an antistatic agent, a surfactant is preferably used. As the surfactant, an anionic surfactant, a cationic surfactant, a nonionic surfactant, an amphoteric surfactant, or a mixture thereof can be used. An antistatic agent may be added as necessary in a proportion of 0.05 to 2 mass% of the resin of the layer to which it is added.

The thermally shrinkable multilayer film according to an embodiment of the present invention is preferably formed as a film having a final thickness in a range of 10 to 150 µm, especially 30 to 120 µm, by laminating the layers and stretching.

More specifically, the thickness of the outer surface layer (a) is, for example, from 0.5 to 50 µm, preferably from 0.5 to 30 µm, and more preferably from 0.5 to 20 µm.

Furthermore, the thickness of the intermediate layer (b) is from 0.5 to 30 µm, and particularly preferably from 1 to 10 µm. When the thickness of the intermediate layer (b) made of the gas-barrier resin is smaller than 0.5 µm, improvement effect of the oxygen barrier tends to be poor. When the thickness is greater than 30 µm, stretching processing of the multilayer film becomes difficult, and material recyclability tends to be inhibited.

Furthermore, the thickness of the inner surface layer (c) is preferably from 0.5 to 50 µm, and more preferably from 1 to 30 µm, to impart a required and adequate sealing strength to the multilayer film.

Furthermore, a plurality of adhesive resin layers can be provided, and the thickness of each layer is preferably from 0.5 to 15 µm.

Note that, in a case where a glycolic acid (co)polymer resin is used in the intermediate layer (b), the thickness of the intermediate layer (b) may be from 0.1 to 30 µm, and preferably from 0.2 to 10 µm, because of excellent oxygen gas barrier properties.

The oxygen gas permeability (O₂TR) of the thermally shrinkable multilayer film used in an embodiment of the present invention is measured using an oxygen permeation analyzer ("OX-TRAN 2/20", available from MOCON) under conditions at a temperature of 23°C and a relative humidity on both sides of 80% in accordance with JIS K 7126. For example, in a case where raw meat is packaged, the oxygen gas permeability of the thermally shrinkable multilayer film is preferably from 1 to 100 cm³/m²·day·atm, more preferably from 1 to 80 cm³/m²·day·atm, and particularly preferably from 1 to 60 cm³/m²·day·atm. When the oxygen gas permeability is greater than 100 cm³/m²·day·atm, preserving properties deteriorate due to oxidation degradation, and 40 days of storage under a condition at 5°C or lower tends to be not possible in a case where raw meat is packaged.

For the thermally shrinkable multilayer film according to an embodiment of the present invention, a value obtained by dividing a measured value (N) at a maximum point until breakage, which is determined by puncturing a fixed sample from an inner surface layer thereof at a speed of 50 mm/min using a puncturing pin having a hemispherical tip with a radius of curvature of 0.5 mm in an atmosphere at 23°C and 50%RH, by a thickness (µm) (puncture strength per unit thickness) is preferably from 0.20 to 0.50 N/µm, more preferably from 0.22 to 0.45 N/µm, and most preferably from 0.30 to 0.40 N/µm. In a case where the puncture strength is less than 0.20 N/µm, when packages containing hard or protruding food products such as meat on the bone are distributed, a greater thickness tends to be needed to suppress breakage of the bag and occurrence of pinholes due to impact caused by falling or the like, and the puncture strength less than 0.20 N/µm is not preferred from the viewpoints of cost and film formability. In a case where the puncture strength is greater than 0.50 N/µm, because the rigidity of the film is high, formability of a bag during secondary processing using the film and ease in opening the package when contents are charged tend to be poor, and the puncture strength greater than 0.50 N/µm is not preferred from the viewpoint of such workability.

For the thermally shrinkable multilayer film according to an embodiment of the present invention, the shrinkage rate in hot water of the film in one of a longitudinal direction (MD) or transverse direction (TD) after the film is immersed in hot water at a temperature of 80°C for 10 seconds is preferably from 40 to 60%, and preferably from 43 to 55%. In a case where the shrinkage rate in hot water is lower than 40%, depending on the size and shape of a material to be packaged, the packaging cannot tightly fit to the contents, and beautiful packaging is less likely to be formed. Furthermore, in a case where the shrinkage rate in hot water is greater than 60%, the contents are tightly squeezed and, for example, in a case of meat packaging, drip (blood) tends to ooze.

For the thermally shrinkable multilayer film according to an embodiment of the present invention, the tensile modulus of elasticity in TD is preferably from 200 to 600 MPa, and more preferably from 300 to 550 MPa. In a case where the modulus of elasticity is lower than 200 MPa, suitability for machines during content filling tends to be poor. In a case where the modulus of elasticity is greater than 600 MPa, the film tends to be hard and have inferior followability to contents. In the present specification, the tensile modulus of elasticity in the TD is a value measured by the method described in Examples below.

In a case where the thermally shrinkable multilayer film according to an embodiment of the present invention contains a polyamide-based resin, because the polyamide-based resin is immiscible with a polyolefin-based resin, material recyclability is poor. For the above-described reason, in a case where the polyamide-based resin is contained, the proportion of the thickness of a layer containing the polyamide relative to all the layers is preferably less than 10%, more preferably less than 5%, and even more preferably less than 2%, when the total thickness of all the layers is 100%. Since a polyamide inhibits shrinkage in hot water, in a case of 10% or greater, setting the shrinkage rate in hot water in the longitudinal direction (MD) or the transverse direction (TD) of the film after the film is immersed in a hot water at a temperature of 80°C for 10 seconds to 40% or greater tends to be difficult.

As the polyamide-based resin, an aliphatic polyamide-based resin and an amorphous aromatic polyamide-based resin are preferably used. As the aliphatic polyamide-based resin, a polyamide 6 (nylon 6) polymer, a polyamide 6-66 (nylon 6-66) copolymer, a polyamide 6-69 (nylon 6-69) copolymer, a polyamide 6-12 (nylon 6-12) copolymer, and a polyamide 6-66-12 (nylon 6-66-12) copolymer are preferably used. As the amorphous aromatic polyamide-based resin, for example, a polycondensate of an aliphatic diamine and, as main acid components, isophthalic acid and terephthalic acid is used. As the acid components, a mixture containing 40 mol% or more and 98 mol% or less of an isophthalic acid component and 2 mol% or more and 60 mol% or less of a terephthalic acid component is preferably used. From the viewpoint of versatility, an amorphous Nylon copolymer commonly known as Nylon 61-6T (Ny6I-6T), in which the aliphatic diamine includes hexamethylene only, is preferably used.

In a case where the thermally shrinkable multilayer film according to an embodiment of the present invention contains a polyester-based resin, because the polyester-based resin is immiscible with a polyolefin-based resin, material recyclability is poor. For the above-described reason, in a case where the polyester-based resin is contained, the proportion of the thickness of a layer containing the polyester relative to all the layers is preferably less than 10%, more preferably less than 5%, and even more preferably less than 2%, when the total thickness of all the layers is 100%. When the proportion of the polyester-based resin is 10% or greater, a haze value and an internal haze value of a recycled sheet tend to increase because of immiscibility with polyolefin at the time of melt-kneading the thermally shrinkable multilayer film for material recycling.

For example, an aliphatic polyester-based resin and an aromatic polyester-based resin are used as the polyester-based resin. The dicarboxylic acid component used in the polyester-based resin may be a dicarboxylic acid used for producing a polyester by an ordinary production method, and examples thereof include terephthalic acid, isophthalic acid, dimer acids made of a dimer of an unsaturated fatty acid, adipic acid, oxalic acid, malonic acid, succinic acid, azelaic acid, sebacic acid, phthalic acid, 5-t-butylisophthalic acid, naphthalene dicarboxylic acid, diphenyl ether dicarboxylic acid, and cyclohexane dicarboxylic acid. Two or more types of these may also be used. The diol component used in the polyester-based resin may be a diol used for producing a polyester by an ordinary production method, and examples include ethylene glycol, propylene glycol, tetramethylene glycol, neopentyl glycol, hexamethylene glycol, diethylene glycol, polyalkylene glycol, 1,4-cyclohexane dimethanol, 2-alkyl-1,3-propanediol, and 1,4-butanediol. Two or more types of these may also be used.

The thermally shrinkable multilayer film according to an embodiment of the present invention preferably contains no ionomer and no electron beam crosslinked layer. An ionomer is not preferred from the viewpoint of cost and tends to result in a low puncture strength per unit thickness and a low modulus of elasticity. An electron beam crosslinked layer tends to inhibit material recyclability because the electron beam crosslinked layer turns into a gel at the time of melting.

In a case where the thermally shrinkable multilayer film according to an embodiment of the present invention contains an ionomer resin, from the viewpoint of cost and puncture strength per unit thickness, the proportion of the thickness of a layer containing the ionomer relative to all the layers is preferably less than 20%, more preferably less than 10%, and most preferably less than 5%, when the total thickness of all the layers is 100%. Since the puncture strength per unit thickness is small when the proportion of the ionomer resin is 20% or greater, when packages containing hard or protruding food products are distributed, a greater thickness tends to be needed to suppress breakage of the bag and occurrence of pinholes due to impact caused by falling or the like, and thus this is not preferred from the viewpoints of cost and film formability.

Examples of the ionomer resin include a resin produced by neutralizing, with a cation, a carboxyl group in an ethylene-unsaturated carboxylic acid copolymer or an ethylene-ethylenic unsaturated carboxylic acid-ethylenic unsaturated carboxylate ternary copolymer (preferably ethylene-ethylenic unsaturated carboxylic acid-ethylenic unsaturated carboxylate ternary copolymer) as a base polymer. As the unsaturated carboxylic acid, methacrylic acid and acrylic acid are preferred. As the unsaturated carboxylate, a methacrylate or acrylate of an alkyl having from 1 to 6 carbons is preferred. Furthermore, as the ternary copolymer, ethylene-methacrylic acid (or acrylic acid)-alkyl methacrylate (or alkyl acrylate) such as ethylene-methacrylic acid-isobutyl acrylate is preferred.

Examples of the cation include metal ions such as Na⁺, K⁺, Li⁺, Cs⁺, Ag⁺, Hg⁺, Cu⁺, Mg²⁺, Zn²⁺, Be²⁺, Ca²⁺, Ba²⁺, Cu²⁺, Cd²⁺, Hg²⁺, Sn²⁺, Pb²⁺, Fe²⁺, Co²⁺, Ni²⁺, Al³⁺, Sc³⁺, Fe³⁺, and y³⁺, and organic amines. Among these cations, Na⁺, K⁺, Ca²⁺, and Zn²⁺ are preferred.

The thermally shrinkable multilayer film according to an embodiment of the present invention is characterized in that it suppresses deterioration of appearance due to deterioration (decomposition/gelation) of the resin and layer separation at the time of melting and forming for reuse of a collected material of the thermally shrinkable multilayer film, and has excellent material recyclability.

For the thermally shrinkable multilayer film according to an embodiment of the present invention, the degree of cloudiness (haze value) of a sheet produced by kneading the film as is in a melt-kneading machine and forming the kneaded product into a sheet having a thickness of 70 to 120 µm using a pressing machine by application of a pressure of 150 kgf/cm² is preferably from 1 to 85%, and more preferably from 1 to 80%, in terms of a value (HA) per 100 µm sheet thickness. The haze value (HA) in an embodiment of the present invention is preferably smaller, and when the haze value (HA) is greater than 85%, appearance of a material-recycled product is impaired.
Furthermore, for the thermally shrinkable multilayer film according to an embodiment of the present invention, the internal haze value of a sheet produced by kneading the film as is in a melt-kneading machine and forming the kneaded product into a sheet having a thickness of 70 to 120 µm using a pressing machine by application of a pressure of 150 kgf/cm² is preferably from 1 to 80%, and more preferably from 1 to 75%, in terms of a value (HI) per 100 µm sheet thickness. In a case where the internal haze value (HI) in an embodiment of the present invention is greater than 80%, miscibility of the resin contained in the sheet may be remarkably poor, and mechanical characteristics tend to be poor.
Furthermore, for the thermally shrinkable multilayer film according to an embodiment of the present invention, the value of degree of yellowness (b*) of a sheet produced by kneading the film as is in a melt-kneading machine and forming the kneaded product into a sheet having a thickness of 70 to 120 µm using a pressing machine by application of a pressure of 150 kgf/cm² is preferably from 1 to 10, more preferably from 1 to 8, and most preferably from 1 to 6, in terms of a value (BY) per 100 µm sheet thickness. The b* value (BY) in an embodiment of the present invention is preferably smaller, a larger numerical value tends to indicate decomposition of the resin, and when the numerical value is greater than 10, appearance of a material-recycled product is impaired.
Note that examples of the measurement methods of the degree of cloudiness (haze value), the internal haze value, and the value of degree of yellowness (b*) of a sheet formed after the film has been kneaded as is in a melt-kneading machine include the methods described in Examples below.
Note that the haze value (HA), the internal haze value (HI), and the b* value (BY) per 100 µm sheet thickness can be calculated based on the following mathematical expressions. Haze value (HA) per 100 µm = measured value of haze value × measured sheet thickness (µm)/100 Internal haze value (HI) per 100 µm = measured value of internal haze value × measured sheet thickness (µm)/100 b* value (BY) per 100 µm = measured value of b* value × measured sheet thickness (µm)/100

Examples of preferred aspect of the layer configuration of the thermally shrinkable multilayer film according to an embodiment of the present invention are described below. However, these examples are merely exemplary, and the present invention is not limited only to these examples. Note that COC2 means another type of COC that is different from the COC.
(1) **LLDPE** + COC/adhesive resin/EVOH/adhesive resin/LLDPE
(2) LLDPE/adhesive resin/EVOH/adhesive resin/LLDPE + COC
(3) LLDPE/adhesive resin/EVOH/adhesive resin/LLDPE + COC + COC2
(4) **LLDPE** + COC/adhesive resin/LLDPE/adhesive resin/EVOH/adhesive resin/LLDPE
(5) LLDPE/adhesive resin/LLDPE + COC/adhesive resin/EVOH/adhesive resin/LLDPE
(6) LLDPE/adhesive resin/LLDPE/adhesive resin/EVOH/adhesive resin/LLDPE + COC
(7) LLDPE/adhesive resin/LLDPE/adhesive resin/EVOH/adhesive resin/LLDPE + COC + COC2
(8) LLDPE + COC/adhesive resin/LLDPE + COC/adhesive resin/EVOH/adhesive resin/LLDPE
(9) VLDPE + COC/adhesive resin/EVOH/adhesive resin/VLDPE
(10) VLDPE/adhesive resin/EVOH/adhesive resin/VLDPE + COC
(11) VLDPE/adhesive resin/EVOH/adhesive resin/VLDPE + COC + COC2
(12) VLDPE + COC/adhesive resin/VLDPE/adhesive resin/EVOH/adhesive resin/VLDPE
(13) VLDPE/adhesive resin/VLDPE + COC/adhesive resin/EVOH/adhesive resin/VLDPE
(14) VLDPE/adhesive resin/VLDPE/adhesive resin/EVOH/adhesive resin/VLDPE + COC
(15) VLDPE/adhesive resin/VLDPE/adhesive resin/EVOH/adhesive resin/VLDPE + COC + COC2
(16) VLDPE + COC/adhesive resin/VLDPE + COC/adhesive resin/EVOH/adhesive resin/VLDPE
(17) LLDPE + COC/adhesive resin/EVA/adhesive resin/EVOH/adhesive resin/LLDPE
(18) LLDPE/adhesive resin/EVA/adhesive resin/EVOH/adhesive resin/LLDPE + COC
(19) LLDPE/adhesive resin/EVA/adhesive resin/EVOH/adhesive resin/LLDPE + COC + COC2
(20) VLDPE + COC/adhesive resin/EVA/adhesive resin/EVOH/adhesive resin/VLDPE
(21) VLDPE/adhesive resin/EVA/adhesive resin/EVOH/adhesive resin/VLDPE + COC
(22) VLDPE/adhesive resin/EVA/adhesive resin/EVOH/adhesive resin/VLDPE + COC + COC2
(23) LLDPE/adhesive resin/LLDPE + COC/adhesive resin/PGA/adhesive resin/LLDPE + COC
(24) LLDPE + COC/adhesive resin/PGA/adhesive resin/LLDPE
(25) LLDPE/adhesive resin/PGA/adhesive resin/LLDPE + COC
(26) LLDPE/adhesive resin/PGA/adhesive resin/LLDPE + COC + COC2
(27) LLDPE + COC/adhesive resin/LLDPE/adhesive resin/PGA/adhesive resin/LLDPE
(28) LLDPE/adhesive resin/LLDPE + COC/adhesive resin/PGA/adhesive resin/LLDPE
(29) LLDPE/adhesive resin/LLDPE/adhesive resin/PGA/adhesive resin/LLDPE + COC
(30) LLDPE/adhesive resin/LLDPE/adhesive resin/PGA/adhesive resin/LLDPE + COC + COC2
(31) LLDPE + COC/adhesive resin/LLDPE + COC/adhesive resin/PGA/adhesive resin/LLDPE
(32) VLDPE + COC/adhesive resin/PGA/adhesive resin/VLDPE
(33) VLDPE/adhesive resin/PGA/adhesive resin/VLDPE + COC
(34) VLDPE/adhesive resin/PGA/adhesive resin/VLDPE + COC + COC2
(35) VLDPE + COC/adhesive resin/VLDPE/adhesive resin/PGA/adhesive resin/VLDPE
(36) VLDPE/adhesive resin/VLDPE + COC/adhesive resin/PGA/adhesive resin/VLDPE
(37) VLDPE/adhesive resin/VLDPE/adhesive resin/PGA/adhesive resin/VLDPE + COC
(38) VLDPE/adhesive resin/VLDPE/adhesive resin/PGA/adhesive resin/VLDPE + COC + COC2
(39) VLDPE + COC/adhesive resin/VLDPE + COC/adhesive resin/PGA/adhesive resin/VLDPE
(40) LLDPE + COC/adhesive resin/EVA/adhesive resin/PGA/adhesive resin/LLDPE
(41) LLDPE/adhesive resin/EVA/adhesive resin/PGA/adhesive resin/LLDPE + COC
(42) LLDPE/adhesive resin/EVA/adhesive resin/PGA/adhesive resin/LLDPE + COC + COC2
(43) VLDPE + COC/adhesive resin/EVA/adhesive resin/PGA/adhesive resin/VLDPE
(44) VLDPE/adhesive resin/EVA/adhesive resin/PGA/adhesive resin/VLDPE + COC
(45) VLDPE/adhesive resin/EVA/adhesive resin/PGA/adhesive resin/VLDPE + COC + COC2

The thermally shrinkable multilayer film according to an embodiment of the present invention can be produced by, for example, a method including: forming a tubular body including at least three layers including an outer surface layer (a) containing a polyolefin-based resin, an intermediate layer (b) containing a gas-barrier resin, and an inner surface layer (c) containing a polyolefin-based resin by co-extruding molten resins in a tubular shape,
forming a biaxially stretched film by cooling the tubular body to a temperature equal to or lower than the melting point of the resins, then heating the tubular body again to a temperature equal to or lower than the melting point of the resins, and stretching the tubular body in a longitudinal direction (MD) and a transverse direction (TD) while the tubular body is being drawn in the longitudinal direction and a fluid is being charged into the inside of the tubular body, and
subsequently, folding the biaxially stretched film, and then, while a fluid is being charged into the inside of the biaxially stretched film, performing simultaneously a heat treatment from an outer surface side of the biaxially stretched film and a relaxing (shrinking) treatment in the longitudinal direction and the transverse direction.
In the formation of the biaxially stretched film, a surface temperature of the resins of the tubular body in a part just before TD stretching (α position in FIG. 1) is preferably from 75 to 90°C, and a surface temperature of the resins in a bottom shoulder forming part (β position in FIG. 1) of an inflation bubble is preferably lower than the surface temperature of the resins in the part just before TD stretching by a range of 5 to 30°C.

More specifically, the thermally shrinkable multilayer film according to an embodiment of the present invention can be produced by using, for example, an apparatus illustrated in FIG. 1. In the apparatus illustrated in FIG. 1, for example, a tubular body (parison) 3 including an outer surface layer, an intermediate layer, and an inner surface layer is co-extruded through an annular die 2 from a number of extruders 1 (only one extruder is illustrated) corresponding to the number of types of layered resins that constitute the multilayer film. During the co-extrusion of the tubular body 3, a deblocking agent such as soybean oil, a glycerin fatty acid ester, and propylene glycol is enclosed as necessary. The molten tubular body 3 immediately after co-extrusion is flattened and taken up by pinch rollers 5 while being cooled in a water bath 4 to a temperature equal to or lower than the melting point of the resin primarily included in each of the layers, preferably to 20°C or lower, and more preferably to 15°C or lower.
Then, the flat body 3a that has been taken up (multilayer film) is introduced into a hot water bath 6 at a temperature equal to or lower than the melting point of the resin primarily included in each of the layers, for example, 75 to 95°C. During the introduction of the flat body 3a into the hot water bath 6, a deblocking agent such as soybean oil, a glycerin fatty acid ester, and propylene glycol is enclosed as necessary. The flat body 3b that has been heated is then drawn upward.
Then, a bubble-shaped tubular body 3c is formed from the flat body 3b by fluid air introduced between a pair of pinch rollers 7 and 8, and simultaneously biaxially stretched in the machine direction (longitudinal direction, MD) and the direction perpendicular to the machine direction (transverse direction, TD) while being cooled with a cooling medium blown from an airing device at 10 to 30°C and 5 to 20 m/s.
At this time, the surface temperature of the tubular body 3c in the part just before TD stretching (α position in FIG. 1) is preferably from 75 to 90°C, and more preferably from 80 to 88°C, as measured by infrared thermography (Teledyne FLIR LLC "FLIR E4") with an emissivity set at 0.83. In a case where the surface temperature of the part just before TD stretching is lower than 75°C, because the yield point stress of the tubular body 3c is large, the internal pressure of the enclosed fluid air becomes high, and thus stretching tends to be difficult. In a case where the surface temperature is higher than 90°C, stretching in the TD tends to be difficult to stop.
Furthermore, the surface temperature of the bottom shoulder forming part (β position in FIG. 1) of the tubular body 3c is preferably cooled to a temperature that is lower than the temperature of the part just before TD stretching (α position in FIG. 1) by a range of 5 to 30°C, and more preferably 10 to 20°C. In a case of 5°C or smaller, the tubular body 3c tends to be broken. In a case of 30°C or larger, the width of the tubular body 3c tends to be small.
The stretch ratios are calculated based on the following equations, and are preferably from 2.0 to 4.0 times, more preferably from 2.5 to 3.5 times, and particularly preferably from 2.8 to 3.5 times, in both the directions: Longitudinal direction (MD) stretch ratio = take-up speed of pinch rollers 8/take-up speed of pinch rollers 7 Transverse direction (TD) stretch ratio = width of flat body 3d/width of flat body 3b

Then, the flat body 3d after stretching is drawn downward, and a bubble-shaped tubular body 3e is again formed from the flat body 3d by fluid air introduced between a pair of pinch rollers 10 and 11, and then it is held inside a heat treatment pipe 12. Then, steam is blown from the nozzles 13 of the heat treatment pipe 12, alone or together with air, and the tubular body 3e during heat treatment is heat-treated preferably at 50°C or higher and 100°C or lower, and more preferably at 60°C or higher and 95°C or lower. The heat treatment is performed for preferably approximately 1 second or longer and 20 seconds or shorter, and more preferably for approximately 1.5 seconds or longer and 10 seconds or shorter.
Then, the tubular body 3e during heat treatment is relaxed (shrunk) such that the relaxation ratios in the longitudinal direction (MD) and the transverse direction (TD) are preferably 2% or greater and 40% or less, and more preferably 5% or greater and 30% or less. The relaxation ratios in both the directions are calculated based on the following equations: Longitudinal direction (MD) relaxation ratio = (1 - (take-up speed of rollers 11/take-up speed of rollers 10) × 100 (%) Transverse direction (TD) relaxation ratio = (1 - (width of flat body 3f/width of flat body 3d)) × 100 (%)

The flat body 3f after such relaxing and heat treatment corresponds to the thermally shrinkable multilayer film according to an embodiment of the present invention, and is wound onto a winding roller 14.

### EXAMPLES

The present invention will be described in further detail hereafter based on Examples and Comparative Examples, but the present invention is not limited to the following examples.

The resins used in the Examples and Comparative Examples are summarized in Table 1 below together with the abbreviations. Note that "O" in the column of "Notes" means that it is a polyolefin-based resin in the present specification.

**[Table 1]**

| Abbreviation | Resin | Grade | Manufacturer | Density | Notes | |
|---|---|---|---|---|---|---|
| LLDPE1 | Linear low density polyethylene | Evolue SP0540 | Prime Polymer Co., Ltd. | 0.903 g/cm³ | MI 3.8 g/10 min | ○ |
| LLDPE2 | Linear low density polyethylene | Evolue SP0510 | Prime Polymer Co., Ltd. | 0.903 g/cm³ | MI 1.2 g/10 min | ○ |
| MA-g-PE | Acid-modified polyethylene | Admer SF730 | Mitsui Chemicals, Inc. | 0.9 g/cm³ | - | ○ |
| EVA1 | Ethylene-vinyl acetate copolymer | Ultrathene 636 | Tosoh Corporation | 0.94 g/cm³ | - | ○ |
| EVOH | Ethylene-vinyl alcohol copolymer | Eval G156B | Kuraray Co., Ltd. | 1.12 g/cm³ | - | |
| COC1 | Cyclic olefin copolymer | TOPAS 9506F-500 | Polyplastics Co., Ltd. | 1.01 g/cm³ | Tg 65°C | ○ |
| COC2 | Cyclic olefin copolymer | TOPAS E-140 | Polyplastics Co., Ltd. | 1.01 g/cm³ | Tg 6°C | ○ |
| Co-PET | Polyethylene terephthalate copolymer | BELLPET IFG-8L | Bell Polyester Products, Inc. | 1.34 g/cm³ | - | |
| PA6 | Polyamide 6 | Ultramid B40L | BASF | 1.12 g/cm³ | - | |
| A-PA | Polyamide 6I-6T | Selar PA3426 | DuPont | 1.18 g/cm³ | - | |
| VLDPE | Very low density polyethylene | Attane 4607GC | DOW | 0.904 g/cm³ | - | ○ |
| EMA | Ethylene-ethyl acrylate copolymer | DPDJ6182 | Nippon Unicar Co., Ltd. | 0.93 g/cm³ | - | ○ |
| PVDC | Vinylidene chloride copolymer | FB-2 | Kureha Corporation | 1.7 g/cm³ | - | |
| EVA2 | Ethylene-vinyl acetate copolymer | Polene8038 | TPI | 0.94 g/cm³ | - | ○ |
| EVA3 | Ethylene-vinyl acetate copolymer | Ultrathene 540 | Tosoh Corporation | 0.94 g/cm³ | - | ○ |
| PGA | Glycolic acid (co)polymer resin | Kuredux 100R50 | Kureha Corporation | 1.5 g/cm³ | - | |

### Example 1

In an inflation device, resins were each separately extruded using a plurality of extruders, and the molten resins were introduced to an annular die to melt and bond in such a manner that the layer configuration was LLDPE1/MA-g-PE/EVA1/MA-g-PE/EVOH/MA-g-PE/LLDPE1+COC1 (50 mass% + 50 mass%) from the outer side to the inner side, and co-extruded. The molten tubular body discharged from a die outlet was rapidly cooled to 10 to 25°C in a water bath, and thus a flat body having a flat body width of 157 mm and a thickness of 270 µm was formed. Next, the flat body was passed through a hot water bath adjusted to 90°C ± 5°C, and then a bubble-shaped tubular body film was formed. The tubular body film was simultaneously biaxially stretched with a stretch ratio of 2.4 times in the longitudinal direction (MD) and 2.8 times in the transverse direction (TD) by the inflation method while being cooled with a cooling medium blown at 15 m/s from airing at a temperature of 20°C. At this time, the surface temperature of the tubular body of the part just before TD stretching (α position in FIG. 1) was 80°C, and the temperature of the bottom shoulder (β position in FIG. 1) of the tubular body was 65°C, which was a value lower than the surface temperature of the part just before TD stretching by 15°C. Then, the biaxially stretched film was heat-treated by IR heat treatment heater at 360°C while being relaxed (shrunk) at 3% in the longitudinal direction and 6% in the transverse direction, and thus a biaxially stretched film (thermally shrinkable multilayer film) was produced. The layer configuration of the obtained biaxially stretched film, the total thickness and thickness (µm) of each layer, the mass proportions of the polyolefin-based resin and the cyclic olefin copolymer relative to the total mass, and stretchability by the inflation method are described in Table 2 together with those for other Examples and Comparative Examples. Note that "*" in Comparative Example 3 means an electron beam crosslinked layer, and " ○ " and "×" for "Stretchability" respectively means "stretchable" and "not stretchable".

Examples of arithmetic calculation methods of "PO mass proportion (wt%)" and "COC mass proportion (wt%)" of Example 1 described in Table 2 are as follows. "PO mass proportion (wt%)": 95 ≈ (100 × (0.903 × 1.4 + 0.9 × 1.0 + 0.94 × 20.0 + 0.9 × 1.0 + 0.9 × 1.0 + (0.903 × 0.5 + 1.01 × 0.5) × 12.0))/(0.903 × 1.4 + 0.9 × 1.0 + 0.94 × 20.0 + 0.9 × 1.0 + 1.12 × 1.6 + 0.9 × 1.0 + (0.903 × 0.5 + 1.01 × 0.5) × 12.0)) "COC mass proportion (wt%)": 16 ≈ (100 × (0.903 × 0.5 + 1.01 × 0.5) × 12.0 × 0.5))/((0.903 × 1.4 + 0.9 × 1.0 + 0.94 × 20.0 + 0.9 × 1.0 + 1.12 × 1.6 + 0.9 × 1.0 + (0.903 × 0.5 + 1.01 × 0.5) × 12.0))

### Examples 2 to 5 and Comparative Example 1

Various biaxially stretched films (thermally shrinkable multilayer films) were obtained in the same manner as in Example 1 except for changing the layer configurations to those described in Table 2. Note that, for Comparative Example 1, the biaxial stretching could not be performed by the inflation method, and a biaxially stretched film (thermally shrinkable multilayer film) could not be obtained.

### Comparative Example 2

In an inflation device, resins were each separately extruded using a plurality of extruders, and the molten resins were introduced to an annular die to melt and bond in such a manner that the layer configuration was Co-PET/MA-g-PE/PA6 + A-PA (85 mass% + 15 mass%)/EVOH/MA-g-PE/VLDPE from the outer side to the inner side, and co-extruded. A molten tubular body discharged from a die outlet was rapidly cooled to 20°C in a water bath to form a film-shaped flat body. Next, the flat body was passed through a 87°C hot water bath, and then a bubble-shaped tubular body film was formed. The tubular body film was simultaneously biaxially stretched with a stretch ratio of 3.0 times in the longitudinal direction (MD) and 3.1 times in the transverse direction (TD) by the inflation method while being cooled with airing at a temperature of 22°C. Then, the biaxially stretched film was introduced into a heat treatment cylinder having a length of approximately 2 m to form a bubble-shaped tubular body film. Thereafter, the tubular body film was heated to 70°C by steam blown from nozzles, and then heat-treated while being relaxed (shrunk) at 6% in the longitudinal direction and 6% in the transverse direction, and thus a biaxially stretched film (thermally shrinkable multilayer film) was produced.

### Comparative Example 3

In an inflation device, resins were each separately extruded using a plurality of extruders, and the molten resins were introduced to an annular die to melt and bond in such a manner that the layer configuration was VLDPE/EVA2/EMA/PVDC/EMA/EVA2/EVA3 from the outer side to the inner side, and co-extruded. A molten tubular body discharged from a die outlet was rapidly cooled to 12°C in a water bath to form a flat body. Then, the flat body was subjected to electron beam radiation from the outside of the flat body in an electron beam irradiation device with an acceleration voltage of 300 KeV to result in a radiation dose of 80 kGy. Next, the flat body was passed through a 82°C hot water bath, and then a bubble-shaped tubular body film was formed. The tubular body film was simultaneously biaxially stretched with a stretch ratio of 3.1 times in the longitudinal direction (MD) and 3.0 times in the transverse direction (TD) by the inflation method while being cooled with airing at 15°C or higher and 20°C or lower. Thus, a biaxially stretched film (thermally shrinkable multilayer film) was produced.

### Evaluation of thermally shrinkable multilayer film

The puncture strength, shrinkage rate in hot water, tensile modulus of elasticity, and material recyclability of the thermally shrinkable multilayer film obtained in the Examples and Comparative Examples were measured by the following method. The puncture strength was measured from the inner surface layer side of the film. The numerical values obtained by the measurement are described in Table 2.

### (1) Puncture Strength

In accordance with JIS Z 1707, using a tensilon universal material testing instrument ("RTC-1210" available from Orientec Co., Ltd.) equipped with a puncturing pin having a hemispherical tip with a radius of curvature of 0.5 mm, a fixed sample was punctured from the inner surface layer with the puncturing pin at a speed of 50 mm/min in an atmosphere at 23°C, 50%RH. A value obtained by dividing the measured value at the maximum point (N) until the film breaks by the thickness (µm) was defined as the puncture strength from the inner surface layer side.

### (2) Shrinkage Rate in Hot Water

A film sample marked at a distance of 10 cm in the machine direction (longitudinal direction, MD) and the direction perpendicular to the machine direction (transverse direction, TD) of the film was immersed in hot water adjusted to 80°C for 10 seconds. Then, it was taken out and immediately cooled with water at ambient temperature (25 ± 5°C). The marked distances were then measured, and the proportions of the reduced values from 10 cm to the original length of 10 cm were indicated as percentages in the longitudinal and transverse directions, respectively. A test was performed five times per sample to determine an average value for each of the longitudinal direction (MD) and the transverse direction (TD), and the value was defined as the shrinkage rate in hot water.

### (3) Tensile Modulus of Elasticity

In accordance with JIS K 7127, in an atmosphere at 23°C, 50%RH, a strip-shaped film sample with a width of 20 mm and a length of 130 mm was mounted on a tensilon universal material testing instrument ("RTC-1210", available from Orientec Co., Ltd.) such that the distance between chucks was 100 mm, stretched for 5 mm in the machine direction (longitudinal direction, MD) and the direction perpendicular to the machine direction (transverse direction, TD) of the film at a tensile speed of 10 mm/min. The strain and the load at this time were measured. The tensile modulus of elasticity was calculated based on the obtained strain and load in accordance with JIS K 7161.

### (4) Material Recyclability

Each of the thermally shrinkable multilayer films of Examples 1 to 5 and Comparative Examples 2 and 3 was charged in a kneading/extrusion molding evaluation tester Labo Plastomill ("4C150", available from Toyo Seiki Seisakusho, Ltd.) and melt-kneaded at a mixer rotation speed of 50 rpm for a kneading time of 3 minutes. After completion of the kneading, 5 g of molten resin was collected by using a bamboo spatula or the like, and a sample for pressing was formed by piling up, from the bottom, an SUS plate having a thickness of 400 µm, a PTFE-impregnated glass cloth sheet having a thickness of 250 µm, 5 g of the molten kneaded product, a PTFE-impregnated glass cloth sheet having a thickness of 250 µm, and an SUS plate having a thickness of 400 µm. This sample was subjected to press-molding in a compression (press) molding machine ("AYSR. 5", available from Kondo Kinzoku Kogyo K.K.) with a preheating time of 1 minute, a compression time of 1 minute, and a pressure of 150 kgf/cm², and thus a sheet was formed. When the thickness of each of the sheets was measured, the thickness was 97 µm for Example 1, 110 µm for Example 2, 104 µm for Example 3, 100 µm for Example 4, 83 µm for Example 5, 84 µm for Comparative Example 2, and 115 µm for Comparative Example 3. The temperatures of the Labo Plastomill and at the time of compression molding were 190°C for Examples 1 to 4 and Comparative Example 3, and were 240°C for Example 5 and Comparative Example 2. With a melting point of a resin having the highest melting point contained in the multilayer film as a reference, this temperature is set to be preferably a reference temperature + 10°C or higher and 60°C or lower, more preferably the reference temperature + 15°C or higher and 50°C or lower, and most preferably the reference temperature + 20°C or higher and 35°C or lower. When the set temperature is lower than the reference temperature + 10°C, unmelted resin tends to remain in the sheet as a foreign substance. When the set temperature is higher than the reference temperature + 60°C, the molded sheet tends to be colored due to decomposition of the resin. Note that the resin having the highest melting point is EVOH (157°C) in Examples 1 to 4, PGA (220°C) in Example 5, Co-PET (220°C) in Comparative Example 2, and PVDC (160°C) in Comparative Example 3. The melting point was measured by a differential scanning calorimeter (DSC) at a temperature increase rate of 10°C/min in accordance with JIS K 7121. The degree of cloudiness (haze value) of the obtained sheet was measured in accordance with JIS K 7136 by using a haze meter ("NDH 7000", available from Nippon Denshoku Industries Co., Ltd.) and using a light source D65. In addition, using the same haze meter, the internal haze value was measured by applying silicon on a surface of the film. Furthermore, the b* value of the obtained sheet was measured by the reflection method by placing the sheet on a white plate in accordance with JIS K 7373 by using a spectrophotometer ("SE 7700", available from Nippon Denshoku Industries Co., Ltd.) and using a light source D65. The b* value was an indicator of the degree of yellowness of the sheet.

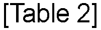

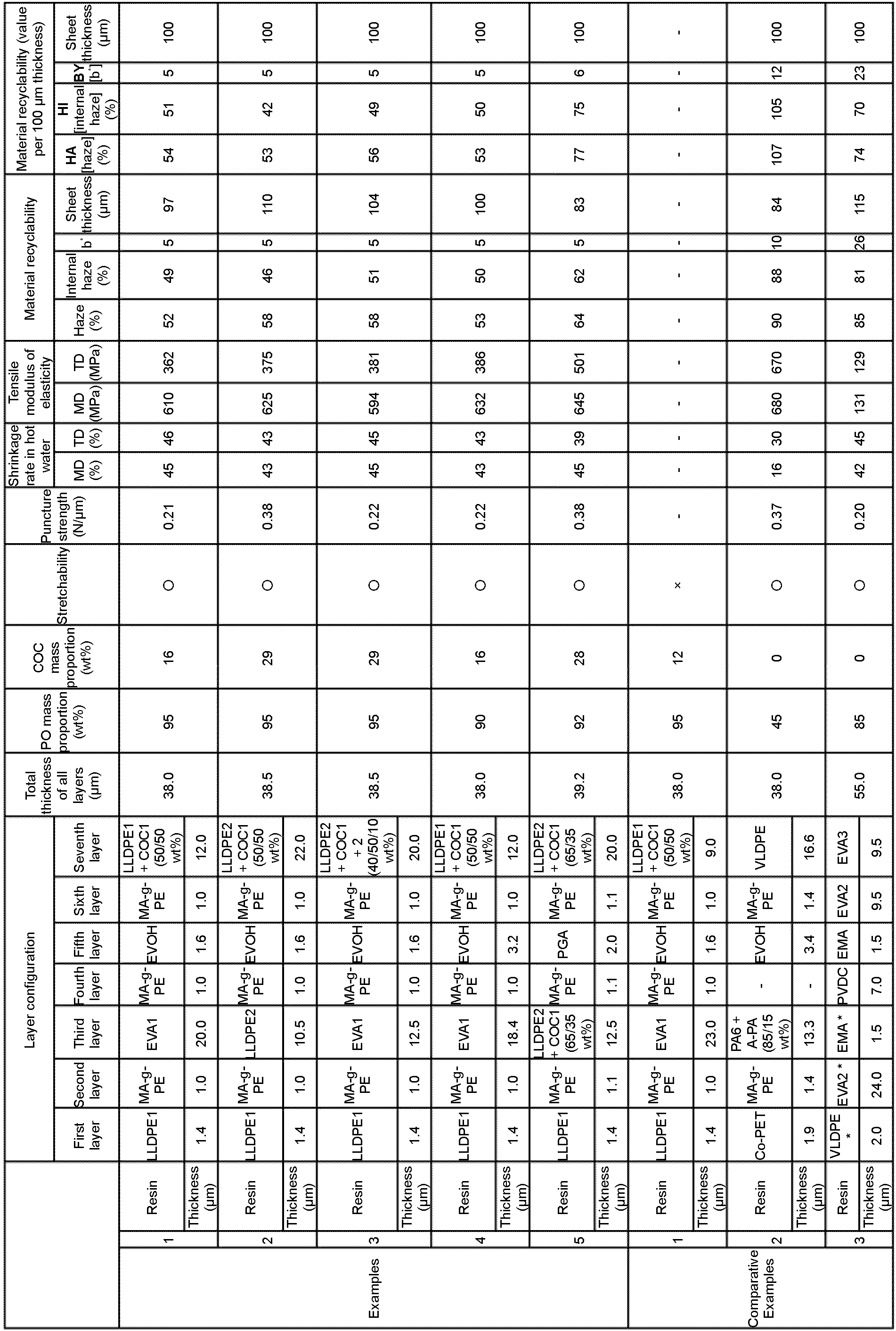

## Claims

1. A thermally shrinkable multilayer film comprising at least three layers including an outer surface layer (a) containing a polyolefin-based resin, an intermediate layer (b) containing a gas-barrier resin, and an inner surface layer (c) containing a polyolefin-based resin, wherein
at least one layer of the multilayer film contains a cyclic olefin copolymer;
when a total mass of the multilayer film is 100 mass%,
a proportion of a mass of the polyolefin-based resin in the multilayer film is 80 mass% or more, and
a proportion of a mass of the cyclic olefin copolymer in the multilayer film is 15 mass% or more.

2. The thermally shrinkable multilayer film according to claim 1, wherein the polyolefin-based resin in the outer surface layer (a) and/or the inner surface layer (c) contains at least one type selected from the group consisting of a very low density polyethylene and a linear low-density polyethylene, and a cyclic olefin copolymer.

3. The thermally shrinkable multilayer film according to claim 2, wherein the cyclic olefin copolymer contains one or both of a cyclic olefin copolymer having a glass transition temperature of 50 to 68°C and a cyclic olefin copolymer having a glass transition temperature of -10 to 20°C.

4. The thermally shrinkable multilayer film according to claim 1, wherein the gas-barrier resin in the intermediate layer (b) contains at least one type selected from the group consisting of a partially saponified product of an ethylene-vinyl acetate copolymer and a glycolic acid (co)polymer resin.

5. The thermally shrinkable multilayer film according to claim 1, wherein the thermally shrinkable multilayer film has a tensile modulus of elasticity in a transverse direction (TD) of from 200 to 600 MPa.

6. A method for producing the thermally shrinkable multilayer film described in any one of claims 1 to 4, wherein
a surface temperature of resins in a part just before TD stretching is from 75 to 90°C, and
a surface temperature of the resins in a bottom shoulder forming part of an inflation bubble is lower than the surface temperature of the resins in the part just before TD stretching by a range of 5 to 30°C.
